# EUROPEAN PATENT SPECIFICATION

(11) **EP 3 231 129 B1**
(45) Date of publication and mention of the grant of the patent: **08.05.2019**
(21) Application number: 15866759.2
(22) Date of filing: 11.11.2015
(51) Int. Cl.: H04L 9/32

(54) **TECHNOLOGIES FOR VERIFYING AUTHORIZED OPERATION OF SERVERS**
TECHNOLOGIEN ZUR ÜBERPRÜFUNG VON AUTORISIERTEM BETRIEB VON SERVERN
PROCÉDÉS DE VÉRIFICATION D'AUTORISATION D'EXPLOITATION DE SERVEURS

(30) Priority: 12.12.2014 US 201414568747
(43) Date of publication of application: 18.10.2017
(73) Proprietor: Intel Corporation, Santa Clara, CA 95054 (US)
(72) Inventor: POORNACHANDRAN, Rajesh, Portland, OR 97229 (US); ZIMMER, Vincent J., Federal Way, WA 98003 (US); SHAHIDZADEH, Shahrok, Portland, OR 97225 (US); KUMAR, Mohan J., Aloha, OR 97007 (US); GHETIE, Sergiu D., Hillsboro, OR 97124 (US)
(74) Representative: Schäflein, Christian Georg
(86) International application number: PCT/US2015/060151
(87) International publication number: WO 2016/094017

(56) References cited:
- EP-A2- 2 372 521
- US-A1- 2006 168 307
- US-A1- 2009 070 496
- US-A1- 2011 225 449
- US-A1- 2013 219 470
- US-A1- 2014 025 359
- US-A1- 2014 173 089
- US-A1- 2014 207 921
- US-A1- 2014 282 815

## Description

### CROSS-REFERENCE TO RELATED U.S. PATENT APPLICATION

The present application claims priority to U.S. Utility Patent Application Serial No. 14/568,747, entitled "TECHNOLOGIES FOR VERIFYING AUTHORIZED OPERATION OF SERVERS," which was filed on December 12, 2014.

### BACKGROUND

Companies that utilize data centers and have geographic location constraints associated with the servers of the data centers encounter significant challenges in tracking the locations of the servers. For example, it may be a violation of domestic export laws to move a particular server to a different location and/or release sensitive information outside a particular location (e.g., a country of origin). That is, a server may have secure or controlled data that is legally or otherwise required to be maintained within the country of origin (e.g., the United States). In other circumstances, a company may require all servers to be maintained within a particular geographic region to prevent booting in a hostile data center where probes, dual port memory, and/or other mechanisms may be used to exfiltrate sensitive information from a particular server.

It is often difficult for such companies to determine the host location of the individual servers processing the companies' data in a data center, the various data security measures taken to protect the data, and/or the effectiveness of the data security measures in the particular data center architecture. Further, a thief may steal one or more servers from a data center. Although various mechanisms exist to recover the server itself, preventing data access from a stolen server is a serious challenge. Furthermore, the data stored on the servers is oftentimes much more valuable that the servers themselves.

US 2014/025359 A1, EP2372521 A2, US 2014/282815 A1, US 2014/173089 A1 are considered relevant prior art.

The invention is defined by the appended claims.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for verifying authorized operation of servers;
FIG. 2 is a simplified block diagram of at least one embodiment of a dual-headed identification device of the server of the system of FIG. 1;
FIG. 3 is a simplified block diagram of at least one embodiment of an environment of the administration server of the system of FIG. 1;
FIG. 4 is a simplified block diagram of at least one embodiment of any environment of the server of the system of FIG. 1;
FIG. 5 is a simplified flow diagram of at least one embodiment of a method for verifying authorized operation of servers by the administration server of the system of FIG. 1; and
FIG. 6 is a simplified flow diagram of at least one embodiment of a method for confirming authorized operation by the server of the system of FIG. 1.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C): (A and B); (B and C); (A and C); or (A, B, and C). Similarly, items listed in the form of "at least one of A, B, or C" can mean (A); (B); (C): (A and B); (B and C); (A and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

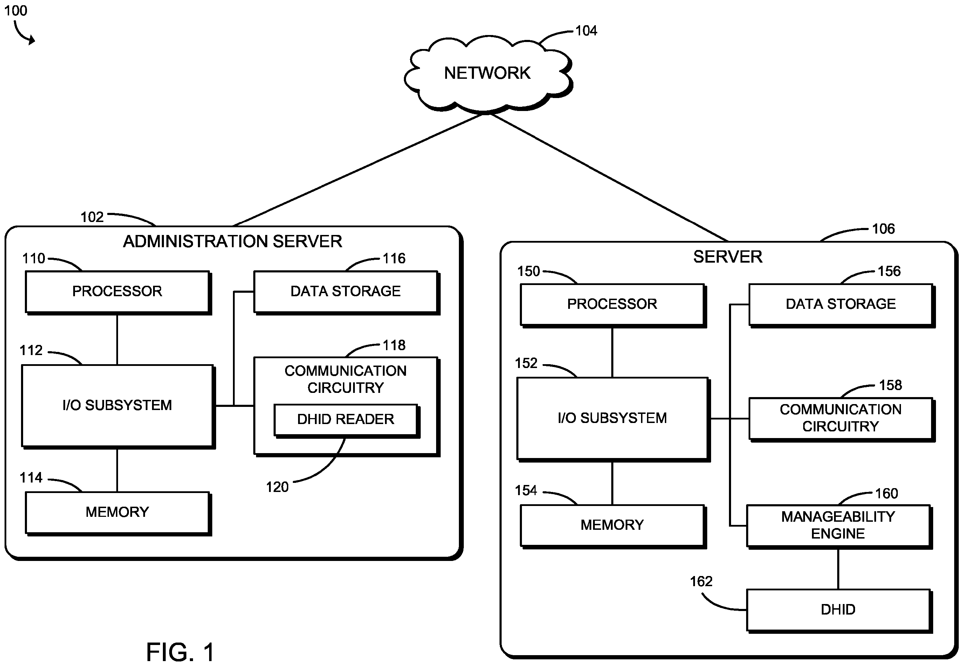

Referring now to FIG. 1, a system 100 for verifying authorized operation of one or more servers illustratively includes an administration server 102, a network 104, and a server 106. Although only one administration server 102, one network 104, and one server 106 are illustratively shown in FIG. 1, the system 100 may include any number of administration servers 102, networks 104, and/or servers 106 in other embodiments. For example, in some embodiments, the administration server 102 may query multiple servers 106 to authenticate those servers 106 based on the server identity, context (e.g., geographical location), security policy, and/or other information as described herein. In some embodiments, the servers 106 may belong to or otherwise be associated with a particular data center (e.g., local or distributed).

As described in detail below, in the illustrative embodiment, the administration server 102 wirelessly communicates (e.g., via radio frequency (RF) communication) directly with a dual-headed identification device of the server 106 to determine an identity of the server 106 and a context of the server 106 (e.g., the geographical location of the server 106) and to determine whether the server 106 is authorized to boot/operate based on that information and a security policy of the server 106. In some embodiments, as described below, a manageability engine of the server 106 reads a query from the memory of the dual-headed identification device of the server 106 by virtue of a wired communication connection established between the dual-headed identification device and the manageability engine. In such embodiments, the manageability engine further attests to the integrity of the identification data, context data, security policy, and/or other data to be conveyed to the administration server 102 and stores a response to the query in the memory of the dual-headed identification device for subsequent access by the administration server 102 (e.g., via RF communication).

The administration server 102 may be embodied as any type of computing device capable of performing the functions described herein. For example, the administration server 102 may be embodied as a desktop computer, server, router, switch, laptop computer, tablet computer, notebook, netbook, Ultrabook™, cellular phone, smartphone, wearable computing device, personal digital assistant, mobile Internet device, Hybrid device, gateway, and/or any other computing/communication device. As shown in FIG. 1, the illustrative administrative server 102 includes a processor 110, an input/output ("I/O") subsystem 112, a memory 114, a data storage 116, and a communication circuitry 118. Additionally, as shown, the communication circuitry 118 includes a dual-headed identification device (DHID) reader 120. Of course, the administration server 102 may include other or additional components, such as those commonly found in a typical computing device (e.g., various input/output devices and/or other components), in other embodiments. Additionally, in some embodiments, one or more of the illustrative components may be incorporated in, or otherwise form a portion of, another component. For example, the memory 114, or portions thereof, may be incorporated in the processor 110 in some embodiments.

The processor 110 may be embodied as any type of processor capable of performing the functions described herein. For example, the processor 110 may be embodied as a single or multi-core processor(s), digital signal processor, microcontroller, or other processor or processing/controlling circuit. Similarly, the memory 114 may be embodied as any type of volatile or non-volatile memory or data storage capable of performing the functions described herein. In operation, the memory 114 may store various data and software used during operation of the administration server 102 such as operating systems, applications, programs, libraries, and drivers. The memory 114 is communicatively coupled to the processor 110 via the I/O subsystem 112, which may be embodied as circuitry and/or components to facilitate input/output operations with the processor 110, the memory 114, and other components of the administration server 102. For example, the I/O subsystem 112 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 112 may form a portion of a system-on-a-chip (SoC) and be incorporated, along with the processor 110, the memory 114, and other components of the administration server 102, on a single integrated circuit chip.

The data storage 116 may be embodied as any type of device or devices configured for short-term or long-term storage of data such as, for example, memory devices and circuits, memory cards, hard disk drives, solid-state drives, or other data storage devices. The data storage 116 and/or the memory 114 may store various data during operation of the administration server 102 useful for performing the functions described herein.

The communication circuitry 118 may be embodied as any communication circuit, device, or collection thereof, capable of enabling communications between the administration server 102 and other remote devices over the network 104 (e.g., the server 106) and/or other networks or communication links. The communication circuitry 118 may be configured to use any one or more communication technologies (e.g., wireless or wired communications) and associated protocols (e.g., Ethernet, Bluetooth®, Wi-Fi®, WiMAX, etc.) to effect such communication. The DHID reader 120 may be embodied as any communication circuit, device, or collection thereof, capable of communicating with DHIDs 162 of the server(s) 106 as described herein. For example, in some embodiments, the DHID reader 120 may be embodied as an RF reader/writer capable of reading data from and/or storing data to memory of the DHIDs 162.

The network 104 may be embodied as any type of communication network capable of facilitating communication between the administration server 102 and remote devices (e.g., the server 106). As such, the network 104 may include one or more networks, routers, switches, computers, and/or other intervening devices. For example, the network 104 may be embodied as or otherwise include one or more cellular networks, telephone networks, local or wide area networks, publicly available global networks (e.g., the Internet), an ad hoc network, or any combination thereof.

Each server 106 may be embodied as any computing device capable of performing the functions described herein. For example, the server 106 may be embodied as a desktop computer, server, router, switch, laptop computer, tablet computer, notebook, netbook, Ultrabook™, cellular phone, smartphone, wearable computing device, personal digital assistant, mobile Internet device, Hybrid device, gateway, and/or any other computing/communication device. As shown in FIG. 1, the server 106 includes a processor 150, an I/O subsystem 152, a memory 154, a data storage 156, a communication circuitry 158, a manageability engine 160, and a dual-headed identification device (DHID) 162. It should be appreciated that, in some embodiments, one or more components of the server 106 (e.g., the processor 150, the I/O subsystem 152, the memory 154, the data storage 156, and/or the communication circuitry 158) may be similar to corresponding components of the administration server 102 as described above.

The manageability engine 160 may be embodied as any hardware component(s) or circuitry capable of performing the functions described herein. For example, in some embodiments, the manageability engine 160 may be embodied as a Converged Security and Manageability Engine (CSME), a co-processor (e.g., a security co-processor), a trusted platform module (TPM), or an out-of-band processor. As discussed below, in some embodiments, the manageability engine 160 may determine a context of the server 106, attest to the integrity of various data (e.g., identification data that identifies the server 106), and communicate with the DHID 162 to exchange data. As shown in FIG. 1, in the illustrative embodiment, the manageability engine 160 is electrically coupled to the DHID 162 by virtue of a wired communication circuit. In other embodiments, the manageability engine 160 may otherwise establish an out-of-band communication link with the DHID 162 and/or remote devices.

The DHID 162 may be embodied as any hardware component(s) or circuitry capable of performing the functions described herein. In particular, in the illustrative embodiment, the DHID 162 includes dual communication modalities that enable the DHID 162 to communicate using both wired and wireless technologies. For example, the DHIDs 162 may be configured to communicate both electrically and wirelessly (e.g., via RF communication). In some embodiments, the DHID 162 may communicate electrically when the administration server 102 is powered and wirelessly regardless of the power state of the administration server 102. For example, as described above, the manageability engine 160 may communicate electrically with the DHID 162. In some embodiments, the DHID 162 may be embodied as, or otherwise include, an RFID device (e.g., including non-volatile RAM and/or other memory). For example, the DHID 162 may be embodied as a Wireless Credential Exchange (WCE) Monza® X UHF RFID chip in some embodiments. In the illustrative embodiment, the DHID 162 is configured to store identification data, one or more security policies (e.g., including constraints), and/or other data associated with the server 106. Although the DHID 162 is described herein as having dual communication modalities, in some embodiments, the DHID 162 may have only a single communication modality (e.g., RF communication) or may have multiple communication modalities.

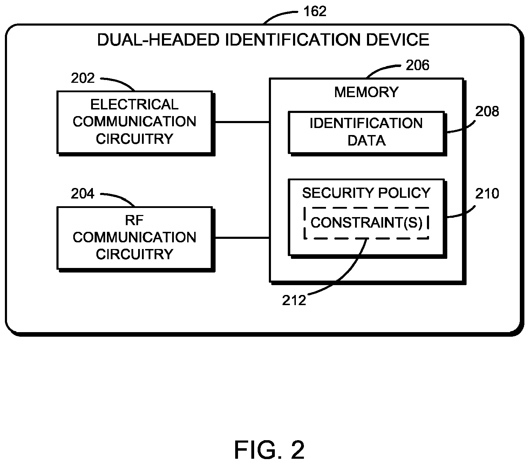

Referring now to FIG. 2, an embodiment of the DHID 162 is illustratively shown. The illustrative DHID 162 includes an electrical communication circuitry 202, an RF communication circuitry 204, and a memory 206. The electrical communication circuitry 202 of the DHID 162 may be embodied as any communication circuitry, device, or collection thereof, capable of enabling electrical communication between the DHID 162 and one or more other components of the server 106 such as the manageability engine 160 (e.g., via point-to-point links, bus links, wires, cables, light guides, printed circuit board traces, etc.). In some embodiments, the electrical communication may be established by electrically coupling pins of the DHID 162 to a communication bus of the sever 106 (e.g., to an inter-integrated circuit (I2C) bus).

The RF communication circuitry 204 may be embodied as any communication circuitry, device, or collection thereof, capable of enabling RF communication between the DHID 162 and one or more other components of the server 106 and/or remote computing devices (e.g., the administration server 102). Depending on the particular embodiment, the RF communication circuitry 204 may enable the DHID 162 to communicate over any corresponding set of radio frequencies (e.g., via Near Field Communication (NFC), low frequency, high frequency, ultra high frequency, etc.). In other embodiments, the DHID 162 may be configured to communicate with the administration server 102 and/or other components of the server 106 using other wireless communication technology. For example, the DHID 162 may include wireless communication circuitry, in addition to or as an alternative to, the RF communication circuitry 204 to enable communication between the DHID 162 and the administration server 102 using one or more wireless communication technologies different from RF communication. For example, in some embodiments, the wireless communication circuitry may permit the DHID 162 to communicate over Bluetooth®, Wi-Fi®, TCP/IP, and/or other wireless communication protocols. It should be appreciated that, in the illustrative embodiment, the DHID 162 may be electrically powered (e.g., by the server 106) and may also be RF-activated (e.g., by the administration server 102).

The memory 206 of the DHID 162 may be similar to the memory 114 of the administration server 102. As such, the memory 206 may be embodied as any type of volatile or non-volatile memory or data storage capable of performing the functions described herein. In the illustrative embodiment, the memory 206 includes a portion of non-volatile memory to store identification data 208 and/or a security policy 210 of the server 106 as described herein. Additionally, in some embodiments, the security policy 210 may include constraint data identifying one or more constraints 212 associated with operation of the server 106. In the illustrative embodiment, the identification data 208 identifies (e.g., uniquely) the server 106. It should be appreciated that the manner by which the identification data 208 identifies the server 106 may vary depending on the particular embodiment. For example, in some embodiments, the identification data 208 may identify the particular make, model, serial number, and/or other characteristics of the server 106. Further, in some embodiments, the identification data 208 may include a unique serial number, bar code, and/or other type of signature of the DHID 162.

In the illustrative embodiment, the memory 206 of the DHID 162 may be partially or fully "locked," for example, to prevent access, modification, and/or deletion by various entities. For example, in some embodiments, the memory 206 may be read-only, whereas in other embodiments the memory 206 may have partial or full read-write capabilities. It should be appreciated that those capabilities may be utilized to set a secure partition of the memory 206 to be read-only subsequent to provisioning and locked to prevent malicious software tampering. As described herein, in the illustrative embodiment, the manageability engine 160 of the server 106 and/or the administration server 104 may be provisioned with appropriate credentials (e.g., cryptographic keys, signatures, etc.) to unlock and read/write data stored in the secure partition of the memory 206.

The security policy 210 identifies various operation parameters associated with authorized operation of the server 106. For example, the security policy 210 may identify various constraints 212 (e.g., restrictions, conditions, etc.) associated with operation of the server 106. For example, the security policy 210 may include constraints 212 associated with the modification of data stored in the memory 206, geographical location constraints (e.g., indicating where the server 106 or a particular component of the server 106 is authorized to operate or perform a function), temporal constraints (e.g., indicating a period during which the server 106 or a particular component of the server 106 is authorized to operate or perform a function), and/or other constraint information.

Further, in some embodiments, a portion of the memory 206 may be modified by the administration server 102 (e.g., via RF communication) to transmit queries to the DHID 162 and/or by the manageability engine 160 to transmit responses to the administration server 102 as described herein. In some embodiments, the memory 206 may include various other information as well. For example, the memory 206 may include information regarding the server 106 and/or DHID 162 itself (e.g., component manufacturer, data structure arrangement, cryptographic encryption, signatures, certificates, and/or hash algorithms utilized for secure communication, etc.), provenance data, a cryptographic hash or other signature (e.g., provisioned via field-programmable fuses (FPFs)), and/or other suitable information. It should be appreciated that, in some embodiments, the identification data 208 and/or security policy 210 may be stored on the memory 206 at the time of provisioning (e.g., by the OEM) and locked to prevent any tampering.

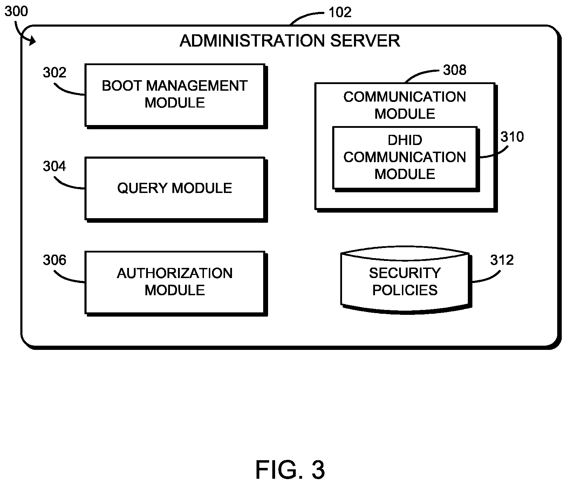

Referring now to FIG. 3, in use, the administration server 102 establishes an environment 300 for verifying authorized operation of one or more servers 106. The illustrative environment 300 of the administration server 102 includes a boot management module 302, a query module 304, an authorization module 306, and a communication module 308. Additionally, the communication module 308 includes a DHID communication module 310. The various modules of the environment 300 may be embodied as hardware, software, firmware, or a combination thereof. For example, the various modules, logic, and other components of the environment 300 may form a portion of, or otherwise be established by, the processor 110 or other hardware components of the administration server 102. As such, in some embodiments, one or more of the modules of the environment 300 may be embodied as a circuit or collection of electrical devices (e.g., a boot management circuit, a query circuit, an authorization circuit, a communication circuit, and/or a DHID communication circuit). Additionally, in some embodiments, one or more of the illustrative modules may form a portion of another module and/or one or more of the illustrative modules may be embodied as a standalone or independent module.

The boot management module 302 handles the booting of servers 106. For example, in some embodiments, the administration server 102 manages the booting of various servers 106 in a data center. That is, in some embodiments, the administration server 102 may select one or more servers 106 to boot and/or to perform operations (e.g., in a cloud computing environment or distributed computing system). Further, in some embodiments, the boot management module 302 may determine and/or perform security actions in response to a determination that the server 106 is not authorized to boot or operate (e.g., based on security policies 312).

The query module 304 is configured to manage queries of dual-headed identification devices. For example, as described below, the query module 304 may query the DHID 162 of the server 106 for identification data 208 indicative of an identity of the server 106 (e.g., via the DHID communication module 310). In some embodiments, the query module 304 may transmit a challenge message to the server 106 by virtue of the DHID 162 (e.g., for a challenge-response protocol). For example, the query module 304 may communicate with the server 106 prior to booting a particular server 106 and/or in order to perform a heartbeat check with the server 106 to confirm that the security policy 210 (e.g., constraints 212) is met.

The authorization module 306 determines whether various servers 106 are authorized to boot and/or operate based on the context (e.g., geographical location) of the server 106, the identification data (i.e., the identity) of the server 106, and/or the security policy 210 of the server 106. In doing so, the authorization module 306 may determine the context of the server 106 (e.g., based on sensor data and/or other contextual data generated, received, and/or derived by the server 106) and the identity of the server 106 (e.g., based on the identification data 208). In some embodiments, the authorization module 306 compares the identity or identification data 208 of the server 106 to one or more whitelists or blacklists in determining whether to authorize boot and/or operation of the server 106. It should be appreciated that, in some embodiments, the authorization module 306 may store the identification data and/or security policies 312 of various servers 106. For example, in some embodiments, such information may be received via a back channel at the time of provisioning of the DHID 162.

The communication module 406 handles the communication between the administration server 102 and remote devices (e.g., the server 106) through the network 104 and/or other networks or communication links. Additionally, in the illustrative embodiment, the DHID communication module 310 handles the wireless communication of the administration server 102 with the DHID 162 of the server 106 (e.g., via the DHID reader 120).

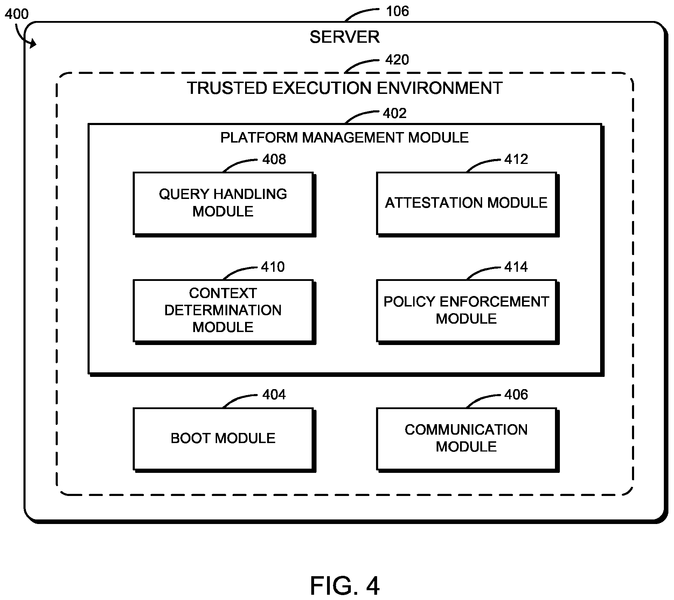

Referring now to FIG. 4, in use, the server 106 establishes an environment 400 for confirming authorized operation of the server 106. The illustrative environment 400 includes a platform management module 402, a boot module 404, and a communication module 406. Additionally, the platform management module 402 includes a query handling module 408, a context determination module 410, an attestation module 412, and a policy enforcement module 414. The various modules of the environment 400 may be embodied as hardware, software, firmware, or a combination thereof. For example, the various modules, logic, and other components of the environment 400 may form a portion of, or otherwise be established by, the processor 150 or other hardware components of the server 106. As such, in some embodiments, one or more of the modules of the environment 400 may be embodied as a circuit or collection of electrical devices (e.g., a platform management circuit, a boot circuit, a communication circuit, a query handling circuit, a context determination circuit, an attestation circuit, and/or a policy enforcement circuit). Additionally, in some embodiments, one or more of the illustrative modules may form a portion of another module and/or one or more of the illustrative modules may be embodied as a standalone or independent module.

In some embodiments, the server 106 establishes a trusted execution environment 420 for secure execution of instructions. As shown in FIG. 4, in some embodiments, one or more of the modules of the environment 400 may be executed in the trusted execution environment 420. In some embodiments, the trusted execution environment 420 may be established by the manageability engine 160. Further, it should be appreciated that the trusted execution environment 420 may be established as or otherwise utilize various technologies including, for example, Intel® Software Guard Extensions (SGX), Trusted Execution Environment (TEE), Trusted Platform Module (TPM), Intel® Converged Security Engine (CSE), ARM® TrustZone®, Intel® Manageability Engine, Intel® Chaabi Security Engine, and/or other techniques and mechanisms for establishing a secure and trusted execution environment. In some embodiments, the trusted execution environment 420 has access to dedicated computing and storage resources, for example, to improve resistance to malware and malicious conduct.

The platform management module 402 is configured manage various operations of the server 106 as described below. In particular, the query handling module 408 may receive queries from the administration server 102, generate a response to those queries, and respond to the administration server 102. For example, as described above, the administration server 102 may communicate with the DHID 162 of the server 106 (e.g., via RF communication) to store data in the memory 206 of the DHID 162 (e.g., for a challenge-response communication and/or to request the identity, context, security policy, and/or other information of the server 106), which may be retrieved by the query handling module 408. Similarly, the generated response may be stored in the memory 206 of the DHID 162 for retrieval by the administration server 102 (e.g., via the DHID reader 120).

The context determination module 410 determines a context of the server 106 at a given point in time based on, for example, sensor data and/or other contextual data generated, received, and/or derived by the server 106. For example, in some embodiments, the context determination module 410 may determine a geographical location of the server 106, a current time, a physical or virtual relationship of the server 106 to other devices, and/or other contextual information regarding the server 106 and/or components of the server 106.

The attestation module 412 may attest to the integrity of data stored on the memory 206 of the DHID 162 and/or other information associated with the server 106. For example, in some embodiments, the attestation module 412 may attest that the identification data 208 and/or context data associated with the server is accurate and/or current. It should be appreciated that the attestation module 412 may utilize any suitable algorithms, techniques, and/or mechanisms for doing so (e.g., cryptographic signatures, hash algorithms, time stamps, etc.). In some embodiments, the attestation module 412 may perform such attestation as a portion of a challenge-response protocol between the administration server 102 and the server 106 by virtue of the DHID 162.

The policy enforcement module 414 enforces security actions for the server 106 based on the security policy 210 of the server 106 and/or instructions received from the administration server 102. For example, in some embodiments, the administration server 102 may determine that the server 106 is not authorized to boot and/or operate in which case the policy enforcement module 414 may enforce corresponding security actions. Depending on the particular circumstances, security policy 210, and/or instructions received, the policy enforcement module 414 may, for example, prevent the server 106 from booting or performing one or more functions.

The boot module 404 handles the booting of the server 106. In doing so, the boot module 404 initializes various components and/or modules of the server 106 for operation. As described above, in some embodiments, the server 106 boots in response to receiving such an instruction from the administration server 102 (e.g., in a data center implementation). Further, in some embodiments, the boot module 404 may instruct the platform management module 402 (e.g., via UEFI boot initialization) to ensure that the server 106 is authorized to boot prior to fully booting the server 106. The communication module 406 handles the communication between the server 106 and remote devices (e.g., the administration server 102) through the network 104.

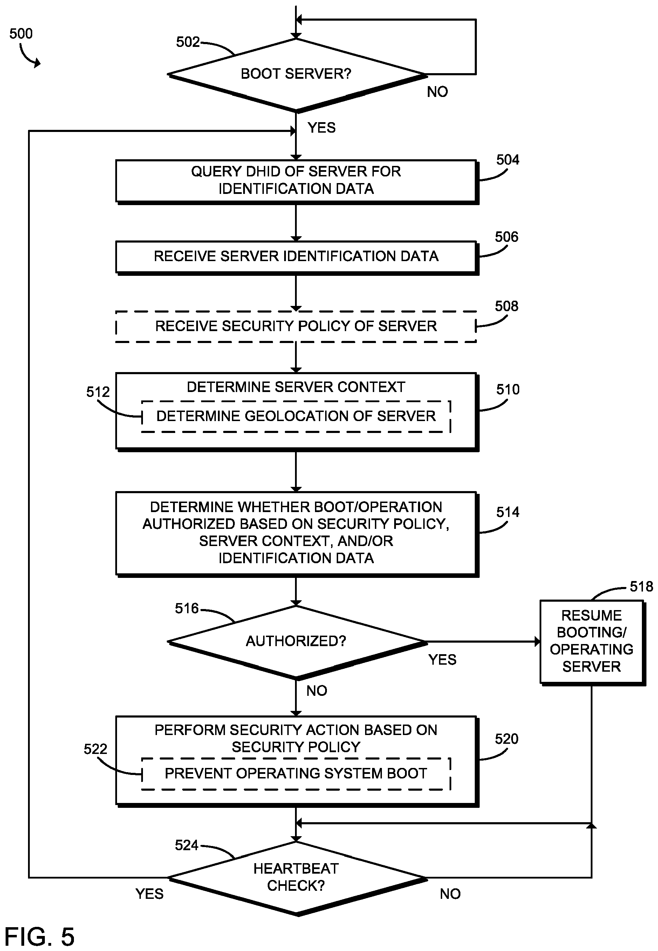

Referring now to FIG. 5, in use, the administration server 102 may execute a method 500 for verifying authorized operation of the server 106. The illustrative method 500 begins with block 502 in which the administration server 102 determines to boot the server 106. For example, in some embodiments, the administration server 102 manages a data center such that the administration server 102 determines/selects which servers perform various operations (e.g., in a cloud computing system, distributed computing system, and/or virtualized network system). If the administration server 102 determines to boot the server 106, in block 504, the administration server 102 queries the DHID 162 of the server 106 for identification data of the server 106. As discussed above, in the illustrative embodiment, the administration server 102 may do so over a secure wireless out-of-band communication link (e.g., via RF communication invulnerable to network-based attacks) established between the administration server 102 and the DHID 162. In some embodiments, the administration server 102 stores a message in the memory 206 of the DHID 162 for retrieval by the manageability engine 160 of the server 106. Further, in some embodiments, the query includes a challenge-response message, which the server 106 or, more particularly, the manageability engine 160 may utilize to attest to the integrity of the data provided in the response.

In block 506, the administration server 102 receives the identification data of the server 106 from the server 106. It should be appreciated that, in some embodiments, the identification data uniquely identifies the server 106 and/or otherwise identifies the server 106 in a way in which the administration server 102 may determine whether the server 106 is authorized to boot and/or operate based on the current context of the server 106 (e.g., based on the current geographical location of the server 106). In block 508, the administration server 102 may receive a security policy 210 of the server 106. It should be appreciated that, in some embodiments, the security policy 210 of the server 106 may be received from the server 106 whereas, in other embodiments, the security policy 210 may be received by the administration server 102 (e.g., through a back channel) at the time of provisioning of the DHID 162 of the server 106. In block 510, the administration server 102 determines the context of the server 106. In some embodiments, the administration server 102 makes such a determination based on data received from the server 106. For example, in block 512, the administration server 102 may determine the geographical location of the server 106. Of course, in other embodiments, the administration server 102 may determine other contextual information associated with the server 106 depending on the particular embodiment (e.g., based on the security policy 210 of the server 106). As discussed above, in some embodiments, the server 106 generates a response to the administration server 102 query and stores the response in the memory 206 of the DHID 162 for retrieval by the administration server 102 (e.g., via RF communication). In some embodiments, the data may include an attestation quote or other suitable data generated by the server 106, which the administration server 102 may utilize to confirm the integrity/authenticity of the data.

In block 514, the administration server 102 determines whether the server 106 is authorized to boot and/or operate based on the security policy 210, the server 106 context, and/or the identification data 208 of the server 106. For example, in an embodiment, the server 106 may only be permitted to boot and/or operate within the United States. As such, if the administration server 102 determines based on the contextual data that the server 106 is outside the United States, the administration server 102 may be determine that the server 106 is not authorized to boot/operate and perform a suitable operation as discussed below. It should be appreciated that the particular constraints associated with the authorized booting and/or operation of the server 106 may vary depending on the particular embodiment. For example, in some embodiments, the server 106 may only operate within a particular distance of the administration server 102 (e.g., within the same physical data center). In other embodiments, the server 106 may only operate during a particular period of time defined by the security policy 210. Additionally, in some embodiments, the identity of the server 106 may be compared to a whitelist and/or blacklist in determining whether the server 106 is authorized to boot/operate.

If the administration server 102 determines, in block 516, that the server 106 is authorized, the server 106 is permitted to resume booting and/or operation in block 518. However, if the administration server 102 determines that the server 106 is unauthorized, in block 520, the administration server 102 performs one or more security actions based on the security policy 210 of the server 106. For example, in block 522, the administration server 102 may prevent the operating system of the server 106 from booting.

As discussed above, in the illustrative embodiment, the administration server 102 may perform a heartbeat check of the server 106 to confirm that the server 106 is still authorized to operate based on the security policy 210 of the server 106. For example, the administration server 102 may confirm that the server 106 is still within a particular geographical location within which the server 106 is authorized to operate. If the administration server 102 determines to perform the heartbeat check, the method 500 returns to block 502 in which the administration server 102 again queries the DHID 162 of the server 106. It should be appreciated that, in some embodiments, the administration server 102 may only request updated contextual data of the server 106 (e.g., with a attestation quote and/or signature) for subsequent queries and utilize the previously obtained security policy and identification data to determine whether the server 106 is authorized to continue to operate. In some embodiments, the administration server 102 may perform heartbeat checks periodically (e.g., every 30 seconds, every 30 minutes, or according to another interval), in response to the satisfaction of some condition, or according to some other pattern/scheme.

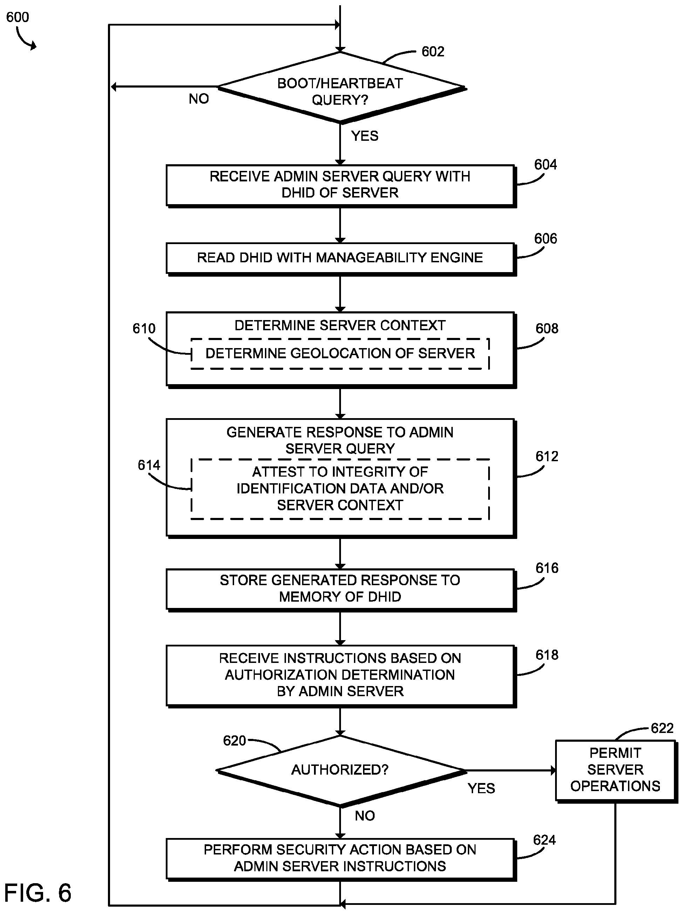

Referring now to FIG. 6, in use, the server 106 may execute a method 600 for confirming authorized operation of the server 106. The illustrative method 600 begins with block 602 in which the server 106 determines whether a boot or heartbeat query has been received from administration server 102. If so, in block 604, the server 106 receives the administration server 102 query with the DHID 162 of the sever 106. As described above, in the illustrative embodiment, the DHID 162 of the server 106 receives the query over a wireless out-of-band communication link (e.g., via RF communication). For example, in some embodiments, the administration server 102 may store a message associated with the query to the memory 206 of the DHID 162.

In block 606, the server 106 reads the memory 206 of the DHID 162 with the manageability engine 160. As described above, in the illustrative embodiment, the DHID 162 and the manageability engine 160 are electrically coupled to one another such that the manageability engine 160 may read the memory 206 of the DHID 162 by virtue of a wired or electrical connection. In block 608, the server 106 determines the context of the server 106. In particular, in block 610, the server 106 may determine the geographical location of the server 106. It should be appreciated that the server 106 may determine the context based on any suitable techniques, algorithms, and/or mechanisms. For example, in some embodiments, the server 106 may determine the context based on sensor data and/or other contextual data generated, received, and/or derived by the server 106.

In block 612, the server 106 generates a response to the administration server 102 query. In doing so, in block 614, the server 106 may attest to the integrity of the identification data and/or the server context. For example, the manageability engine 160 may generate an attestation quote based on the message received from the administration server 102 and/or data requested by the administration server 102 (e.g., the identification data and/or the context data). As discussed above, in some embodiments, the administration server 102 and the server 106 may execute a challenge-response protocol (e.g., including a token, timestamp, signature, and/or other data).

In block 616, the server 106 stores the generated response to the memory 206 of the DHID 162. As described above, the administration server 102 may wirelessly retrieve the data stored in the memory 206 (e.g., via RF communication) and determine whether the server 106 is authorized to boot and/or operate based on the security policy 210 of the server 106. In block 618, the server 106 receives instructions from the administration server 102 based on the authorization determination by the administration server 102. If the server 106 is authorized in block 620, the server 106 permits operation in block 622. Otherwise, the server 106 performs one or more security actions based on the received administration server 102 instructions in block 624. For example, in some embodiments, the server 106 prevents the operating system from booting or one or more functions of the server 106 from being performed. The method 600 returns to block 602 in which the server 106 determines whether another boot/heartbeat query is received from the administration server 102. For example, as discussed above, heartbeat checks may be received from the administration server 102 periodically.

### EXAMPLES

Illustrative examples of the technologies disclosed herein are provided below. An embodiment of the technologies may include any one or more, and any combination of, the examples described below.
Example 1 includes an administration server for verifying authorized operation of servers, the administration server comprising a query module to query a dual-headed identification device of a server for identification data indicative of an identity of the server, wherein the dual-headed identification device includes (i) a wired communication circuit, (ii) a wireless communication circuit, and (iii) a memory having the identification data stored therein; and an authorization module to (i) obtain the identification data from the dual-headed identification device of the server, (ii) determine a context of the server, and (iii) determine whether boot of the server is authorized based on the context of the server, the identification data of the server, and a security policy of the server.
Example 2 includes the subject matter of Example 1, and wherein to query the dual-headed identification device comprises to query the dual-headed identification device over the wireless communication circuit.
Example 3 includes the subject matter of any of Examples 1 and 2, and wherein to query the dual-headed identification device over the wireless communication circuit comprises to query the dual-headed identification device over a radio frequency identification circuit of the dual-headed identification device.
Example 4 includes the subject matter of any of Examples 1-3, and wherein to query the dual-headed identification device comprises to query the dual-headed identification device over an out-of-band communication channel.
Example 5 includes the subject matter of any of Examples 1-4, and wherein to query the dual-headed identification device comprises to perform at least one of an unlock, read, write, or lock operation on the memory of the dual-headed identification device based on credentials established for the administration server at the time of provisioning of the dual-headed identification device.
Example 6 includes the subject matter of any of Examples 1-5, and wherein to determine the context of the server comprises to determine a geographical location of the server.
Example 7 includes the subject matter of any of Examples 1-6, and wherein the security policy identifies a geographical location at which the server is authorized to operate.
Example 8 includes the subject matter of any of Examples 1-7, and wherein the security policy identifies a period of time during which the server is authorized to operate at the geographical location.
Example 9 includes the subject matter of any of Examples 1-8, and wherein to query the dual-headed identification comprises to query the dual-headed identification in response to a boot of the server.
Example 10 includes the subject matter of any of Examples 1-9, and wherein to query the dual-headed identification comprises to query the dual-headed identification in response to a determination to perform a heartbeat check of the server.
Example 11 includes the subject matter of any of Examples 1-10, and further including a boot management module to perform a security action in response to a determination that the server is not authorized to operate based on the security policy.
Example 12 includes the subject matter of any of Examples 1-11, and wherein the authorization module is further to receive the security policy.
Example 13 includes a method for verifying authorized operation of servers by an administration server, the method comprising querying, by the administration server, a dual-headed identification device of a server for identification data indicative of an identity of the server, wherein the dual-headed identification device includes (i) a wired communication circuit, (ii) a wireless communication circuit, and (iii) a memory having the identification data stored therein; obtaining, by the administration server, the identification data from dual-headed identification data of the server; determining, by the administration server, a context of the server; and determining, by the administration server, whether boot of the server is authorized based on (i) the context of the server, (ii) the identification data of the server, and (iii) a security policy of the server.
Example 14 includes the subject matter of Example 13, and wherein querying the dual-headed identification device comprises querying the dual-headed identification device over the wireless communication circuit.
Example 15 includes the subject matter of any of Examples 13 and 14, and wherein querying the dual-headed identification device over the wireless communication circuit comprises querying the dual-headed identification device over a radio frequency identification circuit of the dual-headed identification device.
Example 16 includes the subject matter of any of Examples 13-15, and wherein querying the dual-headed identification device comprises querying the dual-headed identification device over an out-of-band communication channel.
Example 17 includes the subject matter of any of Examples 13-16, and wherein querying the dual-headed identification device comprises performing at least one of an unlock, read, write, or lock operation on the memory of the dual-headed identification device based on credentials established for the administration server at the time of provisioning of the dual-headed identification device.
Example 18 includes the subject matter of any of Examples 13-17, and wherein determining the context of the server comprises determining a geographical location of the server.
Example 19 includes the subject matter of any of Examples 13-18, and wherein the security policy identifies a geographical location at which the server is authorized to operate.
Example 20 includes the subject matter of any of Examples 13-19, and wherein the security policy identifies a period of time during which the server is authorized to operate at the geographical location.
Example 21 includes the subject matter of any of Examples 13-20, and wherein querying the dual-headed identification comprises querying the dual-headed identification in response to booting the server.
Example 22 includes the subject matter of any of Examples 13-21, and wherein querying the dual-headed identification comprises querying the dual-headed identification in response to determining to perform a heartbeat check of the server.
Example 23 includes the subject matter of any of Examples 13-22, and further including performing a security action in response to a determination that the server is not authorized to operate based on the security policy.
Example 24 includes the subject matter of any of Examples 13-23, and further including receiving, by the administration server, the security policy.
Example 25 includes a computing device comprising a processor; and a memory having stored therein a plurality of instructions that when executed by the processor cause the computing device to perform the method of any of Examples 13-24.
Example 26 includes a computing device comprising a processor; and a memory having stored therein a plurality of instructions that when executed by the processor cause the computing device to perform the method of any of claims 13-24.
Example 27 includes an administration server for verifying authorized operation of servers, the administration server comprising means for querying a dual-headed identification device of a server for identification data indicative of an identity of the server, wherein the dual-headed identification device includes (i) a wired communication circuit, (ii) a wireless communication circuit, and (iii) a memory having the identification data stored therein; means for obtaining the identification data from dual-headed identification data of the server; means for determining a context of the server; and means for determining whether boot of the server is authorized based on (i) the context of the server, (ii) the identification data of the server, and (iii) a security policy of the server.
Example 28 includes the subject matter of Example 27, and wherein the means for querying the dual-headed identification device comprises means for querying the dual-headed identification device over the wireless communication circuit.
Example 29 includes the subject matter of any of Examples 27 and 28, and wherein the means for querying the dual-headed identification device over the wireless communication circuit comprises means for querying the dual-headed identification device over a radio frequency identification circuit of the dual-headed identification device.
Example 30 includes the subject matter of any of Examples 27-29, and wherein the means for querying the dual-headed identification device comprises means for querying the dual-headed identification device over an out-of-band communication channel.
Example 31 includes the subject matter of any of Examples 27-30, and wherein the means for querying the dual-headed identification device comprises means for performing at least one of an unlock, read, write, or lock operation on the memory of the dual-headed identification device based on credentials established for the administration server at the time of provisioning of the dual-headed identification device.
Example 32 includes the subject matter of any of Examples 27-31, and wherein the means for determining the context of the server comprises means for determining a geographical location of the server.
Example 33 includes the subject matter of any of Examples 27-32, and wherein the security policy identifies a geographical location at which the server is authorized to operate.
Example 34 includes the subject matter of any of Examples 27-33, and wherein the security policy identifies a period of time during which the server is authorized to operate at the geographical location.
Example 35 includes the subject matter of any of Examples 27-34, and wherein the means for querying the dual-headed identification comprises means for querying the dual-headed identification in response to booting the server.
Example 36 includes the subject matter of any of Examples 27-35, and wherein the means for querying the dual-headed identification comprises means for querying the dual-headed identification in response to a determination to perform a heartbeat check of the server.
Example 37 includes the subject matter of any of Examples 27-36, and further including means for performing a security action in response to a determination that the server is not authorized to operate based on the security policy.
Example 38 includes the subject matter of any of Examples 27-37, and further including means for receiving the security policy.
Example 39 includes a server for confirming authorized operation, the server comprising a dual-headed identification device that includes (i) a wired communication circuit, (ii) a wireless communication circuit, and (iii) a memory having stored therein identification data indicative of an identity of the server; and a platform management module to (i) receive a query from an administration server, (ii) determine a context of the server, (iii) generate a response to the received query based on the determined context, and (iv) store the generated response to the memory of the dual-headed identification device for access by the administration server.
Example 40 includes the subject matter of Example 39, and wherein to receive the query comprises to receive the query over the wireless communication circuit of the dual-headed identification device.
Example 41 includes the subject matter of any of Examples 39 and 40, and wherein the wireless communication circuit comprises a radio frequency identification circuit; and wherein to receive the query comprises to receive the query over the radio frequency identification circuit of the dual-headed identification device.
Example 42 includes the subject matter of any of Examples 39-41, and wherein to receive the query comprises to receive the query over an out-of-band communication channel between the administration server and the dual-headed identification device.
Example 43 includes the subject matter of any of Examples 39-42, and wherein to determine the context of the server comprises to determine a geographical location of the server.
Example 44 includes the subject matter of any of Examples 39-43, and wherein to generate the response to the received query comprises to attest to the integrity of at least one of the identification data or the context of the server.
Example 45 includes the subject matter of any of Examples 39-44, and further including a manageability engine to read the memory of the dual-headed identification device to access the received query; and store the generated response to the memory of the dual-headed identification device, wherein to generate the response comprises generate the response by the manageability engine.
Example 46 includes the subject matter of any of Examples 39-45, and wherein to read the memory comprises to read the memory via the wired communication circuit; and wherein to store the generated response comprises to store the generated response to the memory via the wired communication circuit.
Example 47 includes the subject matter of any of Examples 39-46, and wherein to read the memory comprises to read the memory over a dedicated communication bus between the dual-headed identification device and the manageability engine; and wherein the wired communication circuit is electrically coupled to the dedicated communication bus.
Example 48 includes the subject matter of any of Examples 39-47, and wherein the manageability engine is to perform at least one of an unlock, read, write, or lock operation on the memory of the dual-headed identification device based on credentials established at the time of provisioning of the dual-headed identification device.
Example 49 includes the subject matter of any of Examples 39-48, and wherein the platform management module is further to receive instructions based on a determination of the administration server regarding whether the server is authorized to operate based on the context and a security policy of the server.
Example 50 includes the subject matter of any of Examples 39-49, and wherein the platform management module is further to perform a security action in response to receipt of instructions that indicate the server is not authorized to operate based on the security policy.
Example 51 includes a method for confirming authorized operation of a server, the method comprising receiving, by a dual-headed identification device of the server, a query from an administration server, wherein the dual-headed identification device includes (i) a wired communication circuit, (ii) a wireless communication circuit, and (iii) a memory having stored therein identification data indicative of an identity of the server; determining, by the server, a context of the server; generating, by the server, a response to the received query based on the determined context; and storing, by the server, the generated response to the memory of the dual-headed identification device for access by the administration server.
Example 52 includes the subject matter of Example 51, and wherein receiving the query comprises receiving the query over the wireless communication circuit of the dual-headed identification device.
Example 53 includes the subject matter of any of Examples 51 and 52, and wherein receiving the query comprises receiving the query over a radio frequency identification circuit of the dual-headed identification device.
Example 54 includes the subject matter of any of Examples 51-53, and wherein receiving the query comprises receiving the query over an out-of-band communication channel between the administration server and the dual-headed identification device.
Example 55 includes the subject matter of any of Examples 51-54, and wherein determining the context of the server comprises determining a geographical location of the server.
Example 56 includes the subject matter of any of Examples 51-55, and wherein generating the response to the received query comprises attesting to the integrity of at least one of the identification data or the context of the server.
Example 57 includes the subject matter of any of Examples 51-56, and further including reading, by a manageability engine of the server, the memory of the dual-headed identification device to access the received query; and storing, by the manageability engine, the generated response to the memory of the dual-headed identification device, wherein generating the response comprises generating the response by the manageability engine.
Example 58 includes the subject matter of any of Examples 51-57, and wherein reading the memory comprises reading the memory via the wired communication circuit; and wherein storing the generated response comprises storing the generated response to the memory via the wired communication circuit.
Example 59 includes the subject matter of any of Examples 51-58, and wherein reading the memory comprises reading the memory over a dedicated communication bus between the dual-headed identification device and the manageability engine; and wherein the wired communication circuit is electrically coupled to the dedicated communication bus.
Example 60 includes the subject matter of any of Examples 51-59, and further including performing, by a manageability engine of the server, at least one of an unlock, read, write, or lock operation on the memory of the dual-headed identification device based on credentials established at the time of provisioning of the dual-headed identification device.
Example 61 includes the subject matter of any of Examples 51-60, and further including receiving, by the server, instructions based on a determination of the administration server regarding whether the server is authorized to operate based on the context and a security policy of the server.
Example 62 includes the subject matter of any of Examples 51-61, and further including performing, by the server, a security action in response to receiving instructions indicating that the server is not authorized to operate based on the security policy.
Example 63 includes a computing device comprising a processor; and a memory having stored therein a plurality of instructions that when executed by the processor cause the computing device to perform the method of any of Examples 51-62.
Example 64 includes a computing device comprising a processor; and a memory having stored therein a plurality of instructions that when executed by the processor cause the computing device to perform the method of any of Examples 51-62.
Example 65 includes a server for confirming authorized operation, the server comprising means for receiving, by a dual-headed identification device of the server, a query from an administration server, wherein the dual-headed identification device includes (i) a wired communication circuit, (ii) a wireless communication circuit, and (iii) a memory having stored therein identification data indicative of an identity of the server; means for determining a context of the server; means for generating a response to the received query based on the determined context; and means for storing the generated response to the memory of the dual-headed identification device for access by the administration server.
Example 66 includes the subject matter of Example 65, and wherein the means for receiving the query comprises means for receiving the query over the wireless communication circuit of the dual-headed identification device.
Example 67 includes the subject matter of any of Examples 65 and 66, and wherein the means for receiving the query comprises means for receiving the query over a radio frequency identification circuit of the dual-headed identification device.
Example 68 includes the subject matter of any of Examples 65-67, and wherein the means for receiving the query comprises means for receiving the query over an out-of-band communication channel between the administration server and the dual-headed identification device.
Example 69 includes the subject matter of any of Examples 65-68, and wherein the means for determining the context of the server comprises means for determining a geographical location of the server.
Example 70 includes the subject matter of any of Examples 65-69, and wherein the means for generating the response to the received query comprises means for attesting to the integrity of at least one of the identification data or the context of the server.
Example 71 includes the subject matter of any of Examples 65-70, and further including means for reading, by a manageability engine of the server, the memory of the dual-headed identification device to access the received query; and means for storing, by the manageability engine, the generated response to the memory of the dual-headed identification device, wherein the means for generating the response comprises means for generating the response by the manageability engine.
Example 72 includes the subject matter of any of Examples 65-71, and wherein the means for reading the memory comprises means for reading the memory via the wired communication circuit; and wherein the means for storing the generated response comprises means for storing the generated response to the memory via the wired communication circuit.
Example 73 includes the subject matter of any of Examples 65-72, and wherein the means for reading the memory comprises means for reading the memory over a dedicated communication bus between the dual-headed identification device and the manageability engine; and wherein the wired communication circuit is electrically coupled to the dedicated communication bus.
Example 74 includes the subject matter of any of Examples 65-73, and further including means for performing, by a manageability engine of the server, at least one of an unlock, read, write, or lock operation on the memory of the dual-headed identification device based on credentials established at the time of provisioning of the dual-headed identification device.
Example 75 includes the subject matter of any of Examples 65-74, and further including means for receiving instructions based on a determination of the administration server of whether the server is authorized to operate based on the context and a security policy of the server.
Example 76 includes the subject matter of any of Examples 65-75, and further including means for performing a security action in response to receipt of instructions indicating that the server is not authorized to operate based on the security policy.

## Claims

1. An administration server (102) for verifying authorized operation of servers (106), the administration server (102) comprising:
a query module (304) to query a dual-headed identification device (162) of a server (106) for identification data indicative of an identity of the server (106), wherein the dual-headed identification device (162) includes
(i) a wired communication circuit (202),
(ii) a wireless communication circuit (204), and
(iii) a memory (114) having the identification data stored therein; and
the administration server includes an authorization module (306) to
(i) obtain the identification data from the dual-headed identification device (162) of the server (106),
(ii) determine a context of the server (106), and
(iii) determine whether boot of the server (106) is authorized based on the context of the server, the identification data of the server, and a security policy of the server (106),
**characterized in that** the query module (304) queries again the dual-headed identification device (162) in response to a boot of the server (106), if the administration server (102) performs a heartbeat check of the server (106) to confirm that the server (106) is still authorized to operate.

2. The administration server (102) of claim 1, wherein to query the dual-headed identification device (162) comprises to query the dual-headed identification device (162) over the wireless communication circuit (204).

3. The administration server (102) of claim 2, wherein to query the dual-headed identification device (162) over the wireless communication circuit (204) comprises to query the dual-headed identification device (162) over a radio frequency identification circuit of the dual-headed identification device (162).

4. The administration server (102) of claim 2, wherein to query the dual-headed identification device (162) comprises to query the dual-headed identification device (162) over an out-of-band communication channel.

5. The administration server (102) of claim 1, wherein to query the dual-headed identification device (162) comprises to perform at least one of an unlock, read, write, or lock operation on the memory (114) of the dual-headed identification device (162) based on credentials established for the administration server at the time of provisioning of the dual-headed identification device (162).

6. The administration server of claim 1, wherein to determine the context of the server comprises to determine a geographical location of the server.

7. The administration server of claim 1, wherein the security policy identifies a geographical location at which the server is authorized to operate.

8. The administration server (102) of claim 7, wherein the security policy identifies a period of time during which the server (106) is authorized to operate at the geographical location.

9. The administration server of any of claims 1 - 8, wherein to query the dual-headed identification device (162) comprises to query the dual-headed identification device (162) in response to a determination to perform a heartbeat check of the server (106).

10. The administration server (102) of any of claims 1 - 8, further comprising a boot management module to perform a security action in response to a determination that the server (106) is not authorized to operate based on the security policy.

11. A method for verifying authorized operation of servers (106) by an administration server (102), the method comprising:
querying, by the administration server (102), a dual-headed identification device (162) of a server (106) for identification data indicative of an identity of the server, obtaining, by the administration server (102), the identification data from the dual-headed identification device (162), the dual-headed identification device (162) including (i) a wired communication circuit (202), (ii) a wireless communication circuit (204), and (iii) a memory (114) having the identification data stored therein;
determining, by the administration server (102), a context of the server; and
determining, by the administration server (102), whether boot of the server is authorized based on
(i) the context of the server (106),
(ii) the identification data of the server (106), and
(iii) a security policy of the server (106),
**characterized in that** the query module (304) queries again the dual-headed identification device (162) in response to a boot of the server (106), if the administration server (102) performs a heartbeat check of the server (106) to confirm that the server (106) is still authorized to operate.

12. The method of claim 11,
wherein querying the dual-headed identification device (162) comprises querying the dual-headed identification device (162) over a radio frequency identification circuit of the dual-headed identification device (162); and
wherein determining the context of the server (106) comprises determining a geographical location of the server (106).

13. The method of claim 11,
wherein querying the dual-headed identification device (162) comprises querying the dual-headed identification device (162) in response to at least one of
(i) booting the server (106) or
(ii) determining to perform a heartbeat check of the server (106).

14. One or more machine-readable storage media comprising a plurality of instructions stored thereon that, in response to execution by a computing device, cause the computing device to perform the method of any of claims 1 1 - 13.

## Patentansprüche

1. Administrationsserver (102) zur Überprüfung von autorisiertem Betrieb von Servern (106), wobei der Administrationsserver (102) umfasst:
ein Abfragemodul (304) zum Abfragen einer Dual-Headed-Identifikationsvorrichtung (162) eines Servers (106) nach Identifikationsdaten, die eine Identität des Servers (106) angeben, wobei
die Dual-Headed-Identifikationsvorrichtung (162) aufweist
(i) eine drahtgebundene Kommunikationsschaltung (202),
(ii) eine drahtlose Kommunikationsschaltung (204) und
(iii) einen Speicher (114), in dem die Identifikationsdaten gespeichert werden; und
der Verwaltungsserver ein Autorisierungsmodul (306) aufweist zum
(i) Erhalten der Identifikationsdaten von der Dual-Headed-Identifikationsvorrichtung (162) des Servers (106),
(ii) Bestimmen eines Kontexts des Servers (106) und
(iii) Bestimmen, ob das Booten des Servers (106) autorisiert ist, basierend auf dem Kontext des Servers, den Identifikationsdaten des Servers, und einer Sicherheitsrichtlinie des Servers (106),
**dadurch gekennzeichnet, dass** das Abfragemodul (304) die Dual-Headed-Identifikationsvorrichtung (162) als Reaktion auf ein Booten des Servers (106) erneut abfragt, ob der Verwaltungsserver (102) eine Heartbeat-Prüfung des Servers (106) durchführt, zur Bestätigung, dass der Server (106) immer noch zum Betrieb autorisiert ist.

2. Verwaltungsserver (102) nach Anspruch 1, wobei das Abfragen der Dual-Headed-Identifikationsvorrichtung (162) Abfragen der Dual-Headed-Identifikationsvorrichtung (162) über die drahtlose Kommunikationsschaltung (204) umfasst.

3. Verwaltungsserver (102) nach Anspruch 2, wobei das Abfragen der Dual-Headed-Identifikationsvorrichtung (162) über die drahtlose Kommunikationsschaltung (204) Abfragen der Dual-Headed-Identifikationsvorrichtung (162) über eine Hochfrequenz-Identifikationsschaltung der Dual-Headed-Identifikationsvorrichtung (162) umfasst.

4. Verwaltungsserver (102) nach Anspruch 2, wobei das Abfragen der Dual-Headed-Identifikationsvorrichtung (162) Abfragen der Dual-Headed-Identifikationsvorrichtung (162) über einen Out-of-Band-Kommunikationskanal umfasst.

5. Verwaltungsserver (102) nach Anspruch 1, wobei das Abfragen der Dual-Headed-Identifikationsvorrichtung (162) Durchführen von mindestens einem Ensperren, Lesen, Schreiben oder Sperren des Speichers (114) der Dual-Headed-Identifikationsvorrichtung (162) basierend auf Anmeldedaten, die für den Verwaltungsserver zum Zeitpunkt der Bereitstellung der Dual-Headed-Identifikationsvorrichtung (162) erstellt wurden, umfasst.

6. Verwaltungsserver nach Anspruch 1, wobei das Bestimmen des Kontextes des Servers Bestimmen eines geographischen Orts des Servers umfasst.

7. Verwaltungsserver nach Anspruch 1, wobei die Sicherheitsrichtlinie einen geografischen Ort identifiziert, an dem der Server zum Betrieb autorisiert ist.

8. Verwaltungsserver (102) nach Anspruch 7, wobei die Sicherheitsrichtlinie einen Zeitraum identifiziert, in dem der Server (106) zum Betrieb an dem geografischen Ort autorisiert ist.

9. Verwaltungsserver nach einem der Ansprüche 1 bis 8, wobei das Abfragen der Dual-Headed-Identifikationsvorrichtung (162) Abfragen der Dual-Headed-Identifikationsvorrichtung (162) als Reaktion auf eine Bestimmung zum Durchführen einer Heartbeat-Prüfung des Servers (106) umfasst.

10. Verwaltungsserver (102) nach einem der Ansprüche 1 bis 8, ferner umfassend ein Boot-Verwaltungsmodul zum Durchführen einer Sicherheitsaktion als Reaktion auf eine Bestimmung, basierend auf der Sicherheitsrichtlinie, dass der Server (106) nicht zum Betrieb autorisiert ist.

11. Verfahren zur Überprüfung von autorisiertem Betrieb von Servern (106) durch einen Verwaltungsserver (102), wobei das Verfahren umfasst:
Abfragen einer Dual-Headed-Identifikationsvorrichtung (162) eines Servers (106) nach Identifikationsdaten, die eine Identität des Servers angeben, durch den Verwaltungsserver (102),
Erhalten, durch den Verwaltungsserver (102), der Identifikationsdaten von der Dual-Headed-Identifikationsvorrichtung (162), wobei die Dual-Headed-Identifikationsvorrichtung (162) aufweist
(i) eine drahtgebundene Kommunikationsschaltung (202),
(ii) eine drahtloses Kommunikationsschaltung (204), und
(iii) einen Speicher (114), in dem die Identifikationsdaten gespeichert werden;
Bestimmen eines Kontexts des Servers durch den Verwaltungsserver (102); und
Bestimmen durch den Verwaltungsserver (102), ob der Start des Servers autorisiert ist, basierend auf
(i) den Kontext des Servers (106),
(ii) die Identifikationsdaten des Servers (106) und
(iii) eine Sicherheitsrichtlinie des Servers (106),
**dadurch gekennzeichnet, dass** das Abfragemodul (304) die Dual-Headed-Identifikationsvorrichtung (162) als Reaktion auf ein Booten des Servers (106) erneut abfragt, ob der Verwaltungsserver (102) eine Heartbeat-Prüfung des Servers (106) durchführt, zur Bestätigung, dass der Server (106) noch zum Betrieb autorisiert ist.

12. Verfahren nach Anspruch 11,
wobei das Abfragen der Dual-Headed-Identifikationsvorrichtung (162) Abfragen der Dual-Headed-Identifikationsvorrichtung (162) über eine Hochfrequenz-Identifikationsschaltung der Dual-Headed-Identifikationsvorrichtung (162) umfasst; und
wobei das Bestimmen des Kontexts des Servers (106) Bestimmen eines geographischen Orts des Servers (106) umfasst.

13. Verfahren nach Anspruch 11,
wobei das Abfragen der Dual-Headed-Identifikationsvorrichtung (162) Abfragen der Dual-Headed-Identifikationsvorrichtung (162) als Reaktion auf mindestens eines umfasst von
(i) Booten des Servers (106) oder
(ii) Bestimmen, eine Heartbeat-Prüfung des Servers (106) durchzuführen.

14. Eines oder mehrere maschinenlesbare Speichermedien, umfassend mehrere darauf gespeicherte Anweisungen, die in Reaktion auf eine Ausführung durch eine Computervorrichtung die Rechenvorrichtung veranlassen, das Verfahren nach einem der Ansprüche 11 bis 13 durchzuführen.

## Revendications

1. Serveur d'administration (102) pour vérifier le fonctionnement autorisé de serveurs (106), le serveur d'administration (102) comprenant :
un module d'interrogation (304) pour interroger un dispositif d'identification à double tête (162) d'un serveur (106) sur des données d'identification indicatives d'une identité du serveur (106), dans lequel le dispositif d'identification à double tête (162) comprend
(i) un circuit de communication filaire (202),
(ii) un circuit de communication sans fil (204), et
(iii) une mémoire (114) dans laquelle sont stockées les données d'identification ; et
le serveur d'administration comprend un module d'autorisation (306) pour
(i) obtenir les données d'identification du dispositif d'identification à double tête (162) du serveur (106),
(ii) déterminer un contexte du serveur (106), et
(iii) déterminer si le démarrage du serveur (106) est autorisé en fonction du contexte du serveur, des données d'identification du serveur et des règles de sécurité du serveur (106),
**caractérisé en ce que** le module d'interrogation (304) interroge à nouveau le dispositif d'identification à double tête (162) en réponse à un démarrage du serveur (106), si le serveur d'administration (102) effectue une vérification des pulsations du serveur (106) pour confirmer que le serveur (106) est toujours autorisé à fonctionner.

2. Serveur d'administration (102) selon la revendication 1, dans lequel l'interrogation du dispositif d'identification à double tête (162) comprend l'interrogation du dispositif d'identification à double tête (162) par l'intermédiaire du circuit de communication sans fil (204).

3. Serveur d'administration (102) selon la revendication 2, dans lequel l'interrogation du dispositif d'identification à double tête (162) par l'intermédiaire du circuit de communication sans fil (204) comprend l'interrogation du dispositif d'identification à double tête (162) par l'intermédiaire d'un circuit d'identification par fréquence radio du dispositif d'identification à double tête (162).

4. Serveur d'administration (102) selon la revendication 2, dans lequel l'interrogation du dispositif d'identification à double tête (162) comprend l'interrogation du dispositif d'identification à double tête (162) par l'intermédiaire d'un canal de communication hors bande.

5. Serveur d'administration (102) selon la revendication 1, dans lequel l'interrogation du dispositif d'identification à double tête (162) consiste à effectuer au moins une opération parmi une opération de déverrouillage, de lecture, d'écriture ou de verrouillage sur la mémoire (114) du dispositif d'identification à double tête (162) sur la base des informations d'identification établies pour le serveur d'administration au moment de la fourniture du dispositif d'identification à double tête (162).

6. Serveur d'administration selon la revendication 1, dans lequel la détermination du contexte du serveur consiste à déterminer un emplacement géographique du serveur.

7. Serveur d'administration selon la revendication 1, dans lequel les règles de sécurité identifient un emplacement géographique auquel le serveur est autorisé à fonctionner.

8. Serveur d'administration (102) selon la revendication 7, dans lequel les règles de sécurité identifient une période de temps pendant laquelle le serveur (106) est autorisé à fonctionner à l'emplacement géographique.

9. Serveur d'administration selon l'une quelconque des revendications 1 à 8, dans lequel l'interrogation du dispositif d'identification à double tête (162) comprend l'interrogation du dispositif d'identification à double tête (162) en réponse à une détermination pour effectuer une vérification des pulsations du serveur (106) .

10. Serveur d'administration (102) selon l'une quelconque des revendications 1 à 8, comprenant en outre un module de gestion de démarrage pour effectuer une action de sécurité en réponse à une détermination du fait que le serveur (106) n'est pas autorisé à fonctionner sur la base des règles de sécurité.

11. Procédé de vérification du fonctionnement autorisé des serveurs (106) par un serveur d'administration (102), le procédé comprenant les étapes consistant à :
interroger, par le serveur d'administration (102), un dispositif d'identification à double tête (162) d'un serveur (106) pour des données d'identification indicatives d'une identité du serveur (106),
obtenir, par le serveur d'administration (102), les données d'identification du dispositif d'identification à double tête (162), le dispositif d'identification à double tête (162) comprenant : (i) un circuit de communication filaire (202), (ii) un circuit de communication sans fil (204), et (iii) une mémoire (114) dans laquelle sont stockées les données d'identification ;
déterminer, par le serveur d'administration (102), un contexte du serveur ; et
déterminer, par le serveur d'administration (102), si le démarrage du serveur est autorisé sur la base des éléments suivants
(i) le contexte du serveur (106),
(ii) les données d'identification du serveur (106), et
(iii) des règles de sécurité du serveur (106), **caractérisé en ce que** le module d'interrogation (304) interroge à nouveau le dispositif d'identification à double tête (162) en réponse à un démarrage du serveur (106), si le serveur d'administration (102) effectue une vérification des pulsations du serveur (106) pour confirmer que le serveur (106) est toujours autorisé à fonctionner.

12. Procédé selon la revendication 11,
dans lequel l'interrogation du dispositif d'identification à double tête (162) comprend l'interrogation du dispositif d'identification à double tête (162) sur un circuit d'identification par fréquence radio du dispositif d'identification à double tête (162), et
dans lequel la détermination du contexte du serveur (106) comprend la détermination d'un emplacement géographique du serveur (106).

13. Procédé selon la revendication 11,
dans lequel l'interrogation du dispositif d'identification à double tête (162) comprend l'interrogation du dispositif d'identification à double tête (162) en réponse à au moins l'un des événements suivants
(i) le démarrage du serveur (106) ou
(ii) la détermination d'effectuer une vérification des pulsations du serveur (106).

14. Un ou plusieurs supports de stockage lisibles par une machine comprenant une pluralité d'instructions stockées qui, en réponse à leur exécution par un dispositif informatique, amènent le dispositif informatique à mettre en oeuvre le procédé selon l'une quelconque des revendications 11 à 13.
